# EUROPEAN PATENT SPECIFICATION

(11) **EP 3 075 253 B1**
(45) Date of publication and mention of the grant of the patent: **02.08.2017**
(21) Application number: 16162735.1
(22) Date of filing: 30.03.2016
(51) Int. Cl.: A22C 11/02, A22C 11/04

(54) **MACHINE AND METHOD FOR STUFFING FOOD PRODUCTS**
MASCHINE UND VERFAHREN ZUM FÜLLEN VON LEBENSMITTELPRODUKTEN
MACHINE ET PROCÉDÉ POUR GARNIR DES PRODUITS ALIMENTAIRES

(30) Priority: 01.04.2015 IT VR20150054
(43) Date of publication of application: 05.10.2016
(73) Proprietor: INOX Meccanica S.R.L., 46044 Goito, Frazione Solarolo MN (IT)
(72) Inventor: BOLZACCHINI, Giovanni, 46044 Goito, Frazione Solarolo MN (IT)
(74) Representative: Modiano, Micaela Nadia

(56) References cited:
- EP-A1- 0 090 410
- EP-A1- 1 867 233
- US-A1- 2006 183 413
- US-B1- 6 645 062

## Description

The present invention relates to a machine and a method for stuffing food products.

Stuffing machines are known in the food sector which allow automatically to insert food products, such as in particular pieces of meat, within tubular casings, constituted by an elastic net or by a gut casing, and to close, by means of adapted clips, the ends of the tubular casing.

Machines of this type usually are constituted by a framework that supports at least one die, which defines a recess designed to receive the product to be stuffed.

A pusher acts at the die and translates the product contained in the die through a stuffing tube, on which a tubular casing is loaded which is closed at its end arranged at the outlet of the stuffing tube.

In exiting from the stuffing tube, the product encounters the closed end of the tubular casing and entrains it with itself until it is completely surrounded by the tubular casing, which is then closed to the rear of the product by a clipping unit.

Above the die there is usually a counter-die, which is intended to close the die in order to give a substantially cylindrical shape to the product contained in the die before the pusher translates it through the stuffing tube.

A stuffing machine of the above-mentioned type is for example known from United States patent document US 6 645 062 B1. The forming of the product thus provided is often unsatisfactory with some types of food products.

The aim of the present invention is to solve this drawback, by providing a machine for stuffing food products that allows optimum forming of the products before proceeding with their stuffing.

Within this aim, an object of the invention is to provide a machine for stuffing food products that offers the greatest assurances of reliability and safety in operation.

Another object of the invention is to provide a machine for stuffing food products that has a very simple structure and has a competitive cost.

This aim, as well as these and other objects that will become better apparent hereinafter, are achieved by the stuffing machine for food products, according to the invention, as defined in the appended claims.

Further characteristics and advantages will become better apparent from the description of a preferred but not exclusive embodiment of the machine according to the invention, illustrated by way of nonlimiting example in the accompanying drawings, wherein:

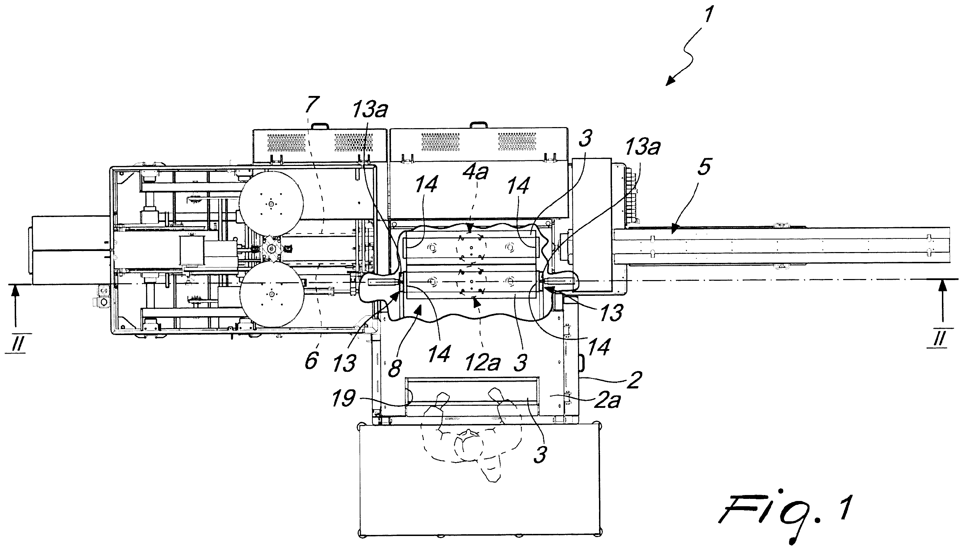

Figure 1 is a partially cutout top plan view of a machine according to the invention;

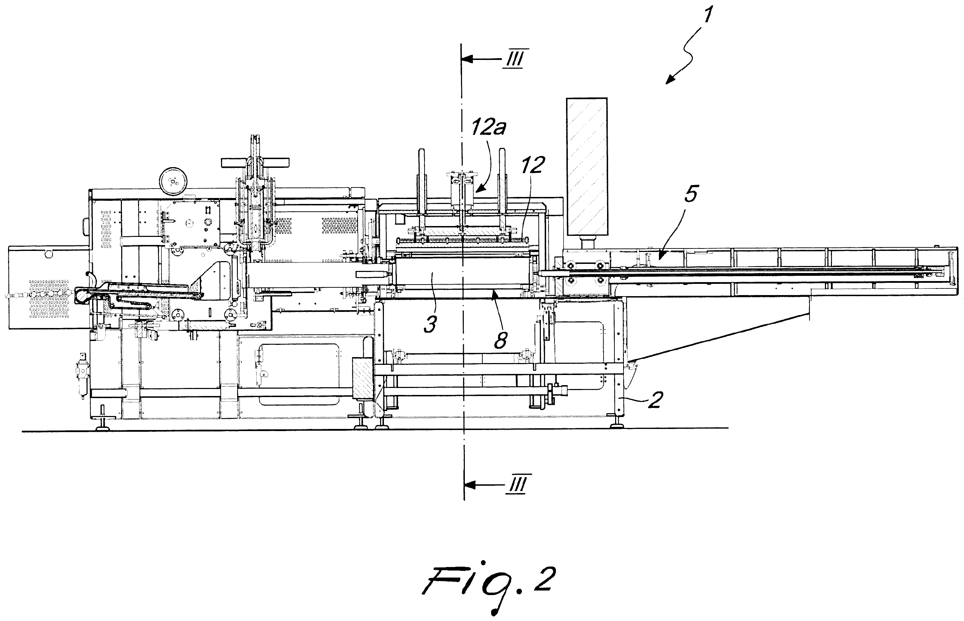

Figure 2 is a sectional view, taken along the line II-II of Figure 1;
Figure 3 is a sectional view, taken along the line III-III of Figure 2.

With reference to the figures, the machine for stuffing food products, according to the invention, generally designated by the reference numeral 1, comprises a framework 2 which supports at least one die 3 designed to contain the product to be stuffed.

In particular, the die 3 is intended further to cooperate with a complementary counter-die 4, which can be moved by way of corresponding actuator means 4a, which are constituted for example by an actuation cylinder, so as to close the die 3 and thus form the product, before a pusher 5, which acts in the region of the counter-die 4, translates the product to be stuffed through a stuffing tube 6, on the outer surface of which a tubular casing 7 is loaded which is intended to surround the product to be stuffed.

According to the invention, means 8 are provided for moving the die 3 along a forward path 8a, which allow to move the die 3 from a loading position 9, in which the die 3 is capable of receiving the product to be stuffed, to a working position 10, in which the die 3 is substantially at the counter-die 4 and at the region of action of the pusher 5.

Also according to the invention, between the loading position 9 and the working position 10 there is at least one preforming station 11 for the product contained in the die 3.

Advantageously, the preforming station 11 comprises at least one preforming counter-die 12 that is adapted to cooperate with the die 3 in order to apply a compression on the product that is capable of preforming the product prior to its final forming provided by means of the counter-die 4.

Preferably, the forward path 8a of the die 3, defined by the movement means 8, is substantially rectilinear and perpendicular to the direction of action of the pusher 5.

In particular, the movement means 8 can be constituted by a supporting surface, such as for example a roller bed or the like, on which the die 3 can be moved manually by an operator, or can be constituted by an automatic conveyor, such as for example a conveyor belt, as shown in the figures, or a chain conveyor, to which the die 3 is coupled.

It should be noted that it is possible to arrange on the movement means 8 a plurality of dies 3 arranged in sequence along the forward path 8a, which are made to advance so as to move them, one after the other, from the loading position 9 to the preforming station 11 and from there to the working position 10.

Advantageously, the preforming counter-die 12 is arranged above the movement means 8 and can be actuated so as to move, along a translation direction that is substantially perpendicular to the forward path 8a, by means of a respective actuator 12a, which is constituted for example by a fluid-operated cylinder.

More particularly, the movement of the preforming counter-die 12 occurs along a direction that is substantially perpendicular to the plane defined by the movement means 8.

Advantageously, at the preforming station 11 there is also at least one presser 13, which is adapted to act on the product contained in each die 3 along a substantially transverse direction with respect to the forward path 8a of the dies 3 on the movement means 8.

More preferably, the presser 13 is adapted to perform, on the food products contained in each die 3, a compression along the direction of extension of such products, which is substantially parallel to the direction along which the pusher 5 moves.

Conveniently, the presser 13 comprises a respective movable piston 13a, which is adapted to be inserted within each die 3, through a corresponding opening 14, defined at one end of the dies 3 that is located along a direction of longitudinal extension of the dies 3 that is substantially transverse to their forward path 8a.

Preferably, as in the illustrated example, in the preforming station 12 there is a pair of pressers 13 arranged mutually opposite with respect to the forward path 8a of the dies 3.

As shown, the pressers 13 are constituted by respective movable pistons 13a, which can be inserted, on mutually opposite sides, within the dies 3 through respective openings 14 defined at the ends of the dies 3 arranged along the direction of longitudinal extension thereof.

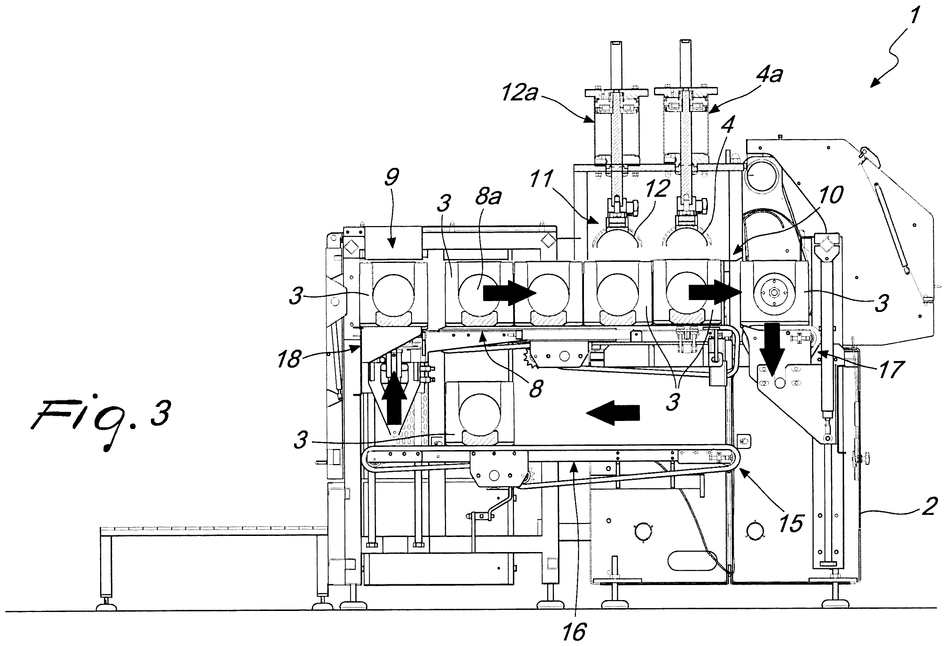

Conveniently, as shown in particular in Figure 3, it is optionally possible to also provide means 15 for the automatic return of the dies 3 to the loading position 9 which are present to move the dies 3, after the intervention of the pusher 5, from the working position 10 to the loading position 9.

In the example shown in Figure 3, the automatic return means 15 comprise a return conveyor 16, which is arranged below the movement means 8, a lowering device 17, which allows to move the dies 3 from the elevation at which the movement means 8 are located to the elevation of the return conveyor 16, and a lifting device 18, which allows to move the dies 3 from the elevation of the return conveyor 16 to the elevation of the movement means 8, thus providing, with the movement means 8, a closed path for the dies 3.

Conveniently, again with reference to the illustrated example, the forward path 8a of the dies 3 defined by the movement means 8 is extended inside a covering 2a, which is fixed to the framework 2 and in which there is, at the loading position 9 of the dies 3, an access opening 19, through which an operator can insert in the die 3 that is in each instance located in the loading position 9 the product to be stuffed.

Operation of the machine according to the invention is as follows.

An operator loads the food product into a die 3 that is in the loading position 9.

The die 3 thus loaded is then transferred, by way of the movement means 8, at the preforming station 11.

At this point the actuator 12a of the counter-die 12 is activated so as to close the die 3 in an upward region and the movable pistons 13a are activated and, by entering the die 3 laterally through the openings 14, compress the product contained in the die 3 also along a direction that is perpendicular to the direction along which the preforming counter-die 12 acts.

Then, again by way of the movement means 8, the die 3 is transferred to the working position 10, where, as a consequence of the actuation of the actuator means 4a, the die 3 is closed by means of the counter-die 4, so as to perform the final forming of the product.

At this point the pusher 5 is actuated and, by passing through the die 3 by means of the openings 14, pushes the formed product along the stuffing tube 6 and makes it exit from the stuffing tube 6, so that it can remain surrounded by the tubular casing 7.

From what has been described above it is evident that the invention is capable of achieving fully the intended aim, since it allows to perform optimum forming of the products before stuffing them.

All the characteristics of the invention indicated above as advantageous, convenient or the like may also be omitted or replaced by equivalents.

The individual characteristics described with reference to general teachings or to particular embodiments may all be present in other embodiments or may replace characteristics in these embodiments.

The invention thus conceived is susceptible of numerous modifications and variations, all of which are within the scope of the appended claims.

In practice, the materials used, so long as they are compatible with the specific use, as well as the shapes and dimensions, may be any according to requirements.

All the details may further be replaced with other technically equivalent elements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A stuffing machine for food products, comprising a framework (2) that supports at least one die (3), designed to contain the product to be stuffed and cooperating with a counter-die (4) to form the product, and a pusher (5) adapted to translate the product to be stuffed, after forming, through a stuffing tube (6) that supports externally a tubular casing (7) designed to surround the product to be stuffed, the stuffing machine further comprising means (8) for moving said at least one die (3) along a forward path (8a) from a loading position (9), in which said at least one die (3) is adapted to receive the product to be stuffed, to a working position (10), in which said die is located substantially at the region of action of said pusher (5), **characterized in that** between said loading position (9) and said working position (10) there being at least one station (11) for preforming the product.

2. The machine according to claim 1, **characterized in that** said at least one preforming station (11) comprises at least one preforming counter-die (12) adapted to cooperate with said at least one die (3).

3. The machine according to claim 2, **characterized in that** said preforming counter-die (12) is arranged above said movement means (8) and can move along a translation direction that is substantially perpendicular to said forward path (8a) of said at least one die (3).

4. The machine according to one or more of the preceding claims, **characterized in that** said forward path (8a) is extended substantially at right angles to the direction of action of said pusher (5).

5. The machine according to one or more of the preceding claims, **characterized in that** said preforming station (11) comprises at least one presser (13) adapted to act along a direction that is substantially parallel to the direction of extension of the product contained in said at least one die (3) along which said pusher (5) substantially acts.

6. The machine according to claim 5, **characterized in that** said at least one presser (13) is adapted to act along a direction that is substantially transverse with respect to said forward path (8a).

7. The machine according to claim 5 or 6, **characterized in that** said at least one presser (13) comprises a respective movable piston (13a), which can be introduced in said die (3), through a corresponding opening (14) defined at one end of said die (3) arranged along a direction of longitudinal extension of said at least one die (3) that is substantially transverse to said forward path (8a).

8. The machine according to one or more of the preceding claims, **characterized in that** it comprises a pair of pressers (13) that are arranged mutually opposite with respect to said forward path (8a) of said at least one die (3).

9. The machine according to claim 8, **characterized in that** said pressers (13) comprise respective movable pistons (13a) that can be inserted, on mutually opposite sides, in said at least one die (3), through respective openings (14) defined at the ends of said die (3) that are located along said direction of longitudinal extension of said at least one die (3).

10. A method for stuffing food products, comprising a step of forming a food product by means of a die (3) and a counter-die (4) and a step of translating the formed food product, by means of a pusher (5), through a stuffing tube (6) that supports externally a tubular casing (7) in order to surround the formed food product in said tubular casing (7), **characterized in that** it comprises, before said forming step, at least one step of preforming said food product.

11. The method according to claim 10, **characterized in that** said at least one preforming step is performed by means of said die (3) and a preforming counter-die (12).

12. The method according to one or more of claims 10 and 11, **characterized in that** said at least one preforming step provides for compressing the food product also along a direction of extension of the food product that is substantially parallel to the direction of motion of said pusher (5).

13. The method according to one or more of claims 10-12, **characterized in that** said at least one preforming step provides for compressing the food product by means of at least one presser (13) that acts along a direction that is substantially perpendicular to said preforming counter-die (12).

14. The method according to one or more of claims 10-13, **characterized in that** said compression is performed by means of a pair of pressers (13) that are mutually opposite with respect to a direction of longitudinal extension of said die (3) that is substantially parallel to the direction of motion of said pusher (5).

## Patentansprüche

1. Eine Füllmaschine für Lebensmittel, die einen Rahmen (2) umfasst, der mindestens einen Stempel (3) trägt, der dazu dient, das einzufüllende Produkt aufzunehmen, und mit einem Gegenstempel (4) zusammenwirkt, um das Produkt zu formen, und einen Schieber (5), ausgebildet, um das einzufüllende Produkt nach dem Formen durch ein Einfüllrohr (6) zu transportieren, das außen ein röhrenförmiges Gehäuse (7) trägt, konstruiert, um das einzufüllende Produkt zu umgeben, wobei die Füllmaschine weiter Mittel (8) umfasst, um den mindestens einen Stempel (3) entlang einem nach vorne gerichteten Weg (8a) aus einer Ladeposition (9), in welcher der mindestens eine Stempel (3) ausgebildet ist, um das einzufüllende Produkt aufzunehmen, in eine Arbeitsposition (10) zu bewegen, in welcher der Stempel sich im Wesentlichen im Wirkungsbereich des Schiebers (5) befindet, **dadurch gekennzeichnet, dass**
sich zwischen der Ladeposition (9) und der Arbeitsposition (10) mindestens eine Station (11) zum Vorformen des Produkts befindet.

2. Die Maschine gemäß Anspruch 1, **dadurch gekennzeichnet, dass** die mindestens eine Vorformstation (11) mindestens einen Vorform-Gegenstempel (12) umfasst, der ausgebildet ist, um mit dem mindestens einen Stempel (3) zusammenzuwirken.

3. Die Maschine gemäß Anspruch 2, **dadurch gekennzeichnet, dass** der Vorform-Gegenstempel (12) oberhalb der Bewegungsmittel (8) angeordnet ist und sich in einer Translationsrichtung bewegen kann, die im Wesentlichen senkrecht zu dem nach vorne gerichteten Weg (8a) des mindestens einen Stempels (3) ist.

4. Die Maschine gemäß einem oder mehreren der obigen Ansprüche, **dadurch gekennzeichnet, dass** der nach vorne gerichtete Weg (8a) sich im Wesentlichen in rechten Winkeln zur Wirkungsrichtung des Schiebers (5) erstreckt.

5. Die Maschine gemäß einem oder mehreren der obigen Ansprüche, **dadurch gekennzeichnet, dass** die Vorformstation (11) mindestens eine Pressvorrichtung (13) umfasst, ausgebildet, um in einer Richtung zu wirken, die im Wesentlichen parallel zur Ausdehnungsrichtung des Produkts ist, das in dem mindestens einen Stempel (3) enthalten ist, entlang welchem der Schieber (5) im Wesentlichen wirkt.

6. Die Maschine gemäß Anspruch 5, **dadurch gekennzeichnet, dass** die mindestens eine Pressvorrichtung (13) ausgebildet ist, um entlang einer Richtung zu wirken, die im Wesentlichen quer zu dem nach vorne gerichteten Weg (8a) ist.

7. Die Maschine gemäß Anspruch 5 oder 6,
**dadurch gekennzeichnet, dass** die mindestens eine Pressvorrichtung (13) einen entsprechenden beweglichen Kolben (13a) umfasst, der durch eine entsprechende Öffnung (14), die an einem Ende des Stempels (3) bestimmt ist, welches entlang einer Richtung der Längsausdehnung des mindestens einen Stempels (3) angeordnet ist, die im Wesentlichen quer zu dem nach vorne gerichteten Weg (8a) ist, in den Stempel (3) eingeführt werden kann.

8. Die Maschine gemäß einem oder mehreren der obigen Ansprüche, **dadurch gekennzeichnet, dass** sie ein Paar von Pressvorrichtungen (13) umfasst, die mit Bezug auf den nach vorne gerichteten Weg (8a) des mindestens einen Stempels (3) einander gegenüber angeordnet sind.

9. Die Maschine gemäß Anspruch 8,
**dadurch gekennzeichnet, dass** die Pressvorrichtungen (13) entsprechende bewegliche Kolben (13a) umfassen, die auf einander gegenüberliegenden Seiten durch entsprechende Öffnungen (14), die an den Enden des Stempels (3) bestimmt sind, welche sich entlang der Richtung der Längsausdehnung des mindestens einen Stempels (3) befinden, in den mindestens einen Stempel (3) eingeführt werden können.

10. Ein Verfahren zum Einfüllen von Lebensmitteln, das einen Schritt des Formens eines Lebensmittels mit Hilfe eines Stempels (3) und eines Gegenstempels (4) und einen Schritt des Transportierens des geformten Lebensmittels mit Hilfe eines Schiebers (5) durch ein Einfüllrohr (6) umfasst, das außen ein röhrenförmiges Gehäuse (7) trägt, um das geformte Lebensmittel in dem röhrenförmigen Gehäuse (7) zu umgeben, **dadurch gekennzeichnet, dass** es vor dem Formschritt mindestens einen Schritt des Vorformens des Lebensmittels umfasst.

11. Das Verfahren gemäß Anspruch 10, **dadurch gekennzeichnet, dass** der mindestens eine Vorformschritt mit Hilfe des Stempels (3) und eines Vorform-Gegenstempels (12) durchgeführt wird.

12. Das Verfahren gemäß einem oder mehreren der Ansprüche 10 und 11, **dadurch gekennzeichnet, dass** der mindestens eine Vorformschritt das Komprimieren des Lebensmittels auch entlang einer Ausdehnungsrichtung des Lebensmittels ermöglicht, die im Wesentlichen parallel zur Bewegungsrichtung des Schiebers (5) ist.

13. Das Verfahren gemäß einem oder mehreren der Ansprüche 10-12, **dadurch gekennzeichnet, dass** der mindestens eine Vorformschritt das Komprimieren des Lebensmittels mit Hilfe mindestens einer Pressvorrichtung (13) ermöglicht, die entlang einer Richtung wirkt, welche im Wesentlichen senkrecht zu dem Vorform-Gegenstempel (12) ist.

14. Das Verfahren gemäß einem oder mehreren der Ansprüche 10-13, **dadurch gekennzeichnet, dass** das Komprimieren mit Hilfe eines Paares von Pressvorrichtungen (13) durchgeführt wird, die einander mit Bezug auf eine Richtung der Längsausdehnung des Stempels (3), die im Wesentlichen parallel zur Bewegungsrichtung des Schiebers (5) ist, einander gegenüberliegen.

## Revendications

1. Machine à farcir pour des produits alimentaires, comprenant une armature (2) qui supporte au moins une matrice (3), conçue pour contenir le produit à farcir et coopérant avec une contre-matrice (4) pour former le produit, et un poussoir (5) adapté pour déplacer en translation le produit à farcir, après formation, à travers un tube à farcir (6) qui supporte extérieurement un boyau tubulaire (7) conçu pour entourer le produit à farcir, la machine à farcir comprenant en outre des moyens (8) pour déplacer ladite au moins une matrice (3) le long d'un trajet aller (8a) depuis une position de chargement (9), dans laquelle ladite au moins une matrice (3) est adaptée pour recevoir le produit à farcir, jusqu' à une position de travail (10), dans laquelle ladite matrice est située sensiblement sur la région d'action dudit poussoir (5), **caractérisée en ce qu'**entre ladite position de chargement (9) et ladite position de travail (10), il y a au moins une station (11) pour préformer le produit.

2. Machine selon la revendication 1, **caractérisée en ce que** ladite au moins une station de préformation (11) comprend au moins une contre-matrice de préformation (12) adaptée pour coopérer avec ladite au moins une matrice (3).

3. Machine selon la revendication 2, **caractérisée en ce que** ladite contre-matrice de préformation (12) est agencée au-dessus desdits moyens de déplacement (8) et peut se déplacer le long d'une direction de translation qui est sensiblement perpendiculaire audit trajet aller (8a) de ladite au moins une matrice (3).

4. Machine selon une ou plusieurs des revendications précédentes, **caractérisée en ce que** ledit trajet aller (8a) s'étend sensiblement à angles droits par rapport à la direction d'action dudit poussoir (5).

5. Machine selon une ou plusieurs des revendications précédentes, **caractérisée en ce que** ladite station de préformation (11) comprend au moins un presseur (13) adapté pour agir le long d'une direction qui est sensiblement parallèle à la direction d'extension du produit contenu dans ladite au moins une matrice (3) le long de laquelle ledit organe de poussée (5) agit sensiblement.

6. Machine selon la revendication 5, **caractérisée en ce que** ledit au moins un presseur (13) est adapté pour agir le long d'une direction qui est sensiblement transversale par rapport audit trajet aller (8a).

7. Machine selon la revendication 5 ou 6, **caractérisée en ce que** ledit au moins un presseur (13) comprend un piston mobile (13a) respectif, qui peut être introduit dans ladite matrice (3), à travers une ouverture (14) correspondante définie à une extrémité de ladite matrice (3) agencée le long d'une direction d'extension longitudinale de ladite au moins une matrice (3) qui est sensiblement transversale audit trajet aller (8a).

8. Machine selon une ou plusieurs des revendications précédentes, **caractérisée en ce qu'**elle comprend une paire de presseurs (13) qui sont agencés mutuellement opposés par rapport audit trajet aller (8a) de ladite au moins une matrice (3).

9. Machine selon la revendication 8, **caractérisée en ce que** lesdits presseurs (13) comprennent des pistons mobiles (13a) respectifs qui peuvent être insérés, sur des côtés mutuellement opposés, dans ladite au moins une matrice (3), à travers des ouvertures (14) respectives définies aux extrémités de ladite matrice (3) qui sont situées le long de ladite direction d'extension longitudinale de ladite au moins une matrice (3).

10. Procédé pour farcir des produits alimentaires, comprenant une étape de formation d'un produit alimentaire au moyen d'une matrice (3) et d'une contre-matrice (4) et une étape de déplacement en translation du produit alimentaire formé, au moyen d'un poussoir (5), à travers un tube à farcir (6) qui supporte extérieurement un boyau tubulaire (7) afin d'entourer le produit alimentaire formé dans ledit boyau tubulaire (7), caractérisé ce qu'il comprend, avant ladite étape de formation, au moins une étape de préformation dudit produit alimentaire.

11. Procédé selon la revendication 10, **caractérisé en ce que** ladite au moins une étape de préformation est réalisée au moyen de ladite matrice (3) et d'une contre-matrice de préformation (12).

12. Procédé selon une ou plusieurs des revendications 10 et 11, **caractérisé en ce que** ladite au moins une étape de préformation permet de comprimer le produit alimentaire également le long d'une direction d'extension du produit alimentaire qui est sensiblement parallèle à la direction de mouvement dudit poussoir (5).

13. Procédé selon une ou plusieurs des revendications 10 à 12, **caractérisé en ce que** ladite au moins une étape de préformation permet de comprimer le produit alimentaire au moyen d'au moins un presseur (13) qui agit le long d'une direction qui est sensiblement perpendiculaire à ladite contre-matrice de préformation (12).

14. Procédé selon une ou plusieurs des revendications 10 à 13, **caractérisé en ce que** ladite compression est réalisée au moyen d'une paire de presseurs (13) qui sont mutuellement opposés par rapport à une direction d'extension longitudinale de ladite matrice (3) qui est sensiblement parallèle à la direction de mouvement dudit poussoir (5).
